# EUROPEAN PATENT SPECIFICATION

(11) **EP 0 439 238 B1**
(45) Date of publication and mention of the grant of the patent: **10.01.1996**
(21) Application number: 91200631.9
(22) Date of filing: 30.10.1987
(51) Int. Cl.: B60C 9/22, B60C 9/20

(54) **Pneumatic radial tyre**
Radialer Luftreifen
Bandage pneumatique radial

(30) Priority: 05.11.1986 JP 263058/86
(43) Date of publication of application: 31.07.1991
(62) Divisional of application: 87907145.4
(73) Proprietor: SUMITOMO RUBBER INDUSTRIES LIMITED, Kobe Port Kobe 651-01 (JP)
(72) Inventor: Oda, Kazuo, 39, Takarazuka-shi, Hyogo 665 (JP)
(74) Representative: Stewart, Charles Geoffrey

(56) References cited:
- FR-A- 2 369 925
- FR-A- 2 421 073

## Description

The present invention relates to a pneumatic radial tyre, more particularly to a radial tyre for aircraft.

A radial tyre for aircraft or for heavy duty use has at least one layer of belt so as to maintain the required tread surface shape under the severe conditions of high internal pressure and heavy load, and to endure impacts from the road surface. Each belt layer has a cord angle of 0 to 90 degrees with regard to the circumferential centre line of the tyre, and is formed by winding belt-shaped material cut at the required width, around a cylindrical belt drum or by winding it directly around a carcass held shaped by an appropriate internal pressure.

In some cases, a belt layer having a wide section width is required in the tyre. In such cases, if shoulder portions of the belt layers are located close to the carcass line then in the shaping and vulcanising processes of a green tyre, the inner diameter of the belt in the shoulder portions becomes less than the inner diameter at the centre portion.

When a tyre having such a belt structure is inflated, if the belt plies are each composed of one-piece structures, an uneven tension is applied to the belt plies. That is, the tension at the tread shoulder portions is less than the tension at the tread centre portion because of the difference in the above-mentioned inner diameters.

This may become a cause of serious structural failure especially in radial tyres for an aircraft which lands and takes off at high speed. For example pneumatic radial tyres attached to an aircraft taking off at a speed of 370 km/h reach that speed in a short time under heavy load. At this moment, in the shoulder portions where the belt tension is relatively small, a phenomenon in which the belt edges are deformed outwardly in the radial direction of the tyre, so-called lifting, occurs due to the centrifugal force on the tread. This induces increased distortion and causes separation of tyre components.

A method employed to prevent such trouble is to construct the full width of the belt ply by the so-called cord winding method so as to unify the tension applied on the belt cord in high-speed running, but this method is poor in production efficiency. Another method, described in Japanese Patent Publication No 44-17801, is to design a profile having a constant belt diameter, but in tyres used at high internal pressure such as aircraft tyres, the increase of diameter on inflation is so large at the tread centre that the tension applied on the tread centre is large. Yet another method, described in FR-A-2369925, which has been applied to a tyre having two full width metal cord belt plies is to overlay the belt plies with a textile fabric layer comprising a centre part and two shoulder parts having circumferentially extending cords which are contracted by the heat of moulding to pre-tension the belt edges.

It is hence a primary object of the present invention, to unify the tension applied on the belt cord on inflation without reducing the efficiency of production, to decrease lifting at the belt edges at high speed, and therefore to enhance the structural durability of the pneumatic radial tyre at high speed.

Accordingly the present invention provides a pneumatic radial tyre comprising a carcass composed of at least one ply of cords arranged substantially in the radial direction, a belt layer comprising a first belt ply adjacent to the outside of the carcass, characterised by the first belt ply comprising a centre part located in the tread centre portion, and two shoulder parts located one in each of the two tread shoulder portions in edge to edge abutment with the centre part, said centre part composed of a rubber-coated cord fabric having a width same as the width of the centre part, each said shoulder part composed of at least one continuous cord wound spirally continuously so as to be arranged substantially parallel to the tyre equator, and the diameter of the shoulder part is greater in the axially inside than the axially outside.

Preferably the cords in the centre belt regions are at an angle to the circumferential axis of the tyre.

The shoulder belts may comprise a single cord spirally wound or a plurality of cords.

Thus to prevent lifting of the belt edges which causes separation at the belt edges, the invention increases the tension of the belt layer in the shoulder portions.

In this invention, by dividing at least one belt ply into three portions, a centre portion and two shoulder portions, and arranging the cords of the shoulder belt portions substantially parallel to the central circumferential line of the tyre, the circumferential length of each portion of cord in each shoulder belt region can be set at a length suitable for the inner diameter at each portion, whereby the tension applied to the belt layer in use can be uniform. The occurrence of lifting is thus prevented and the structural durability is hence enhanced.

Further aspects of the invention will be apparent from the brief description with the drawings in which:-
Fig. 1 shows a sectional shape of a tyre according to the present invention.
Figs. 2 to 5 are sectional views each showing the structure of the shoulder portion of a belt layer.
Figs. 6 and 7 are drawings explaining a method of forming a belt of this invention.
Fig. 8 shows a belt drum.

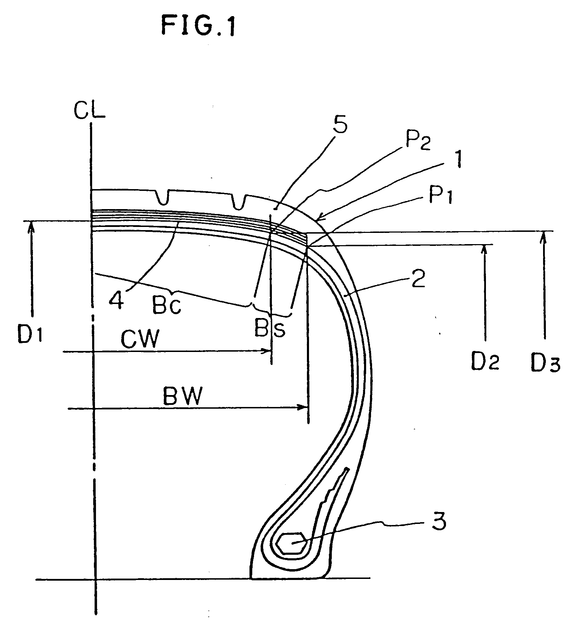

Referring to the drawings, Fig. 1 shows a tyre, which comprises a carcass 2 composed of cords turned up around bead cores 3 from the inside to the outside of the tyre and arranged substantially in the radial direction, a belt layer 4 located outside the carcass 2 and a tread 5.

In the belt layer 4, the inner diameter D1 at the tread centre CL is greater than the inner diameter D2 at the edge P1 of the belt layer. If each belt ply forming the layer is composed of a one-piece structure as in conventional tyre, the tension applied on the belt layer becomes uneven owing to the difference between the above-mentioned D1 and D2, but in the tyre according to the present invention, the tension applied on the belt layer does not become uneven even though the difference in inner diameters D1 and D2 exists.

This is because in this invention, the belt ply is divided into three parts BC and BS near a point P2 where the curvature of the belt ply changes greatly. The inner diameters of the breaker at those positions satisfy the following relation,$\text{D1-D3 < D3-D2}$ where D3 indicates the inner diameter of the belt layer 4 at the point P2.

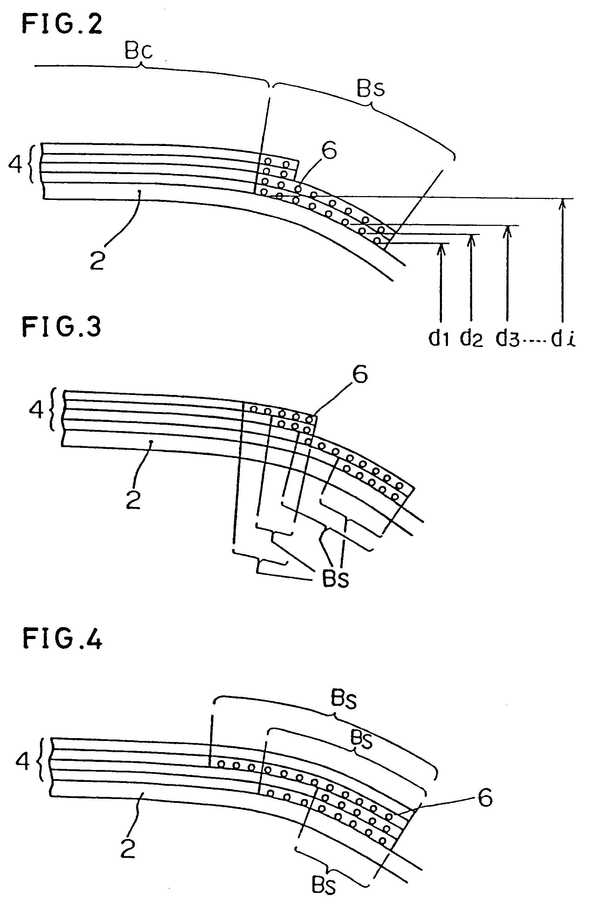

The or each cord forming the edge region BS is substantially parallel to the central circumferential line of the tyre. Fig. 2 shows the shoulder portion of the belt layer 4 in detail. The or each cord 6 construction in the region BS, substantially parallel to the central circumferential line of the tyre, has a circumferential lengths in each respective portion suitable for the inner diameter di at each said portions.

By constructihg in this way, the tension of the belt layer in the shoulder portions in use can be increased, and lifting can thus be prevented.

For the maximum width BW of the belt layer, an appropriate value is chosen depending on the carcass profile of the tyre. When plural belt plies having a three-division structure exist, if the borders of portion BC and the portion BS of the belt plies coincide with each other, the stiffness of the belt layer 4 is seen to change drastically, and a bad influence may therefore be made to its durability and mobility. In such cases, it is possible to shift the boundaries of the portion BC and portions BS of successive belt plies as shown in Fig. 3 and Fig. 4.

Conventionally, a belt layer of a pneumatic radial tyre was formed by winding belt-shaped materials, which are cut to the necessary width, around a cylindrical belt drum or winding such materials on a carcass which is shaped by being filled with pressurised air.

The pneumatic radial tyre of this invention cannot be produced in such a conventional tyre forming method.

Accordingly a belt layer in which the inner diameter gradually decreases at its shoulder portions is formed by producing a belt drum having tapered side parts the diameter of which is gradually reduced on both sides of the cylindrical centre part, forming a centre belt region by winding a rubber coated cord fabric which is at an angle of 0 to 90 degrees with respect to the central circumferential line of the tyre around the above-mentioned centre part, and then forming each shoulder belt by continuously winding at least one rubber coated cord around the above-mentioned tapered parts while gradually moving its position. This method enables one to produce the pneumatic radial tyre of this invention.

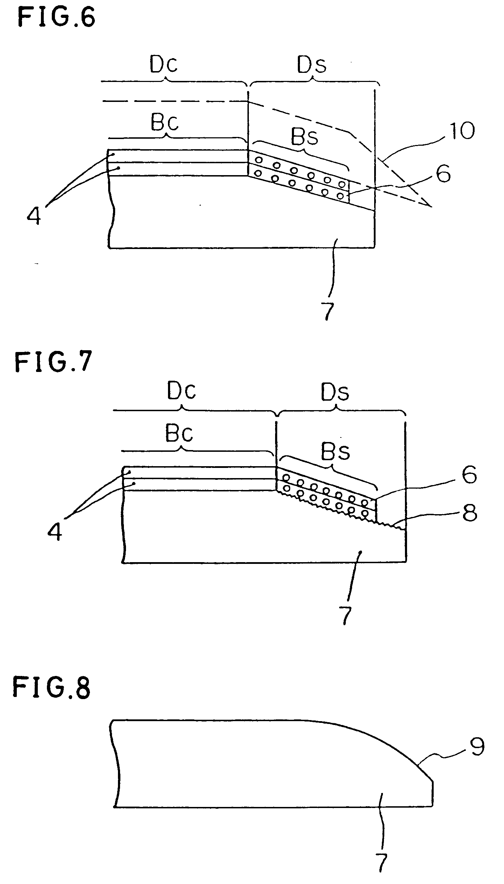

After forming the belt layer, a green tyre is formed according to the conventional method. That is by winding a belt-shaped tread onto the outer circumference of the belt layer located on the belt drum to form a tread/belt laminate assembly, taking the tread/laminate assembly off the belt, drum by reducing its diameter, transferring it to a shaping drum for a green tyre, and assembling it on to a carcass on a shaping drum which is shaped into a toroidal shape. Fig. 6 is a sectional view of a shoulder being formed, a belt drum 7 comprises a centre portion DC and tapered portions DS one at each side of the centre portion. The drum can thus form the centre belt BC of the belt layer 4 on DC, and shoulder belts BS by winding the cord 6 continuously in each belt ply around DS. The width and the angle of inclinations of DS can be arbitrarily selected depending on the necessary length of BX and di for the tyre as shown in Fig. 2. Numeral 10 in Fig. 6 denotes the tread then wound on the belt layer.

In such a case, it is sometimes difficult to form the shoulder belt because the cord slips on the tapered portion. Fig. 7 shows a belt drum having a tapered portion equipped with roughness 8 to prevent such slipping.

The object can be achieved also by a belt drum having a tapered portion with an arc-shaped surface 9 as shown in Fig. 8.

The shoulder belt, meanwhile, can be formed by winding a cord for the shoulder belt in a few stages in the normal direction with regard to the drum axis instead of winding it continuously along the tapered portion of the belt drum.

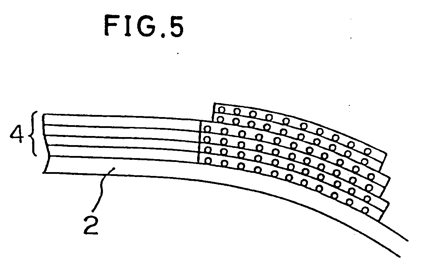

Figs. 2 to 5 show embodiments of the belts according to the present invention.

The belt layer 4 is arranged over the carcass 2 and has shoulder belt regions BS. The or each cord 6 in each shoulder belt BS is substantially parallel to the central circumferential line of the tyre.

Furthermore, the cords of each centre belt BC form an angle of 0 to 90 degrees to the central circumferential line of the tyre.

As material for the cord for the carcass and belt, nylon, rayon, polyester or aromatic polyamide fibres, or non-stretchable fibres such as metallic fibres can be employed. The number of plies thereof can be arbitrarily selected depending on the conditions of use, and the materials chosen.

Fig. 3 shows an example of the belt layer in which the borders between BS and BC in the several belt plies are shifted or staggered from another. Fig. 4 shows another example combined with a belt ply having in the top ply and Fig, 5 shows still another example adding belt plies composed of only shoulder belts. The hoop effect can be further enhanced by this additional layer.

The present invention causes a decrease in lifting at the belt edge of the tyre when running at high speed and greatly enhances the structural durability at high speed as required in such a pneumatic radial tyre. The tyre structure, and its manufacturing method, of this invention can be applied for a pneumatic radial tyre which is used at high speed and in which a high structural durability is required, especially a radial tyre for aircraft.

## Claims

1. A pneumatic radial tyre comprising a carcass (2) composed of at least one ply of cords arranged substantially in the radial direction, a belt layer (4) comprising a first belt ply adjacent to the outside of the carcass, characterised by the first belt ply comprising a centre part (BC) located in the tread centre portion, and two shoulder parts (BS) located one in each of the two tread shoulder portions in edge to edge abutment with the centre part, said centre part (BC) composed of a rubber-coated cord fabric having a width same as the width of the centre part, each said shoulder part (BS) composed of at least one continuous cord wound spirally continuously so as to be arranged substantially parallel to the tyre equator (CL), and the diameter of the shoulder part (BS) is greater in the axially inside than the axially outside.

2. A tyre according to claim 1, characterised by a second belt ply radially outwards of the first belt ply and having the same construction as the first belt ply, and the borders of the centre part (BC) and shoulder part (BS) of each belt ply are axially displaced from the borders of the other belt ply.

3. A tyre according to claim 2, characterised by three such belt plies, the borders of the centre part (BC) and shoulder part (BS) of the said three belt plies being staggered.

4. A tyre according to claim 1, 2 or 3, characterised in the cords in the centre part (BC) are at an acute angle to the circumferential direction of the tyre.

5. A tyre according to claim 1, 2, 3 or 4, characterised in that at least one continuous cord in each said shoulder part (BS) comprises a plurality of cords.

## Patentansprüche

1. Ein Luftradialreifen mit einer Karkasse (2), die aus wenigstens einer Lage von Corden zusammengesetzt ist, die im wesentlichen in der radialen Richtung angeordnet sind, und einer Gürtelschicht (4) mit einer ersten Gürtellage benachbart zur Außenseite der Karkasse,
dadurch gekennzeichnet,
daß die erste Gürtellage einen Mittelteil (BC), der in dem Laufflächenmittelteil angeordnet ist, und zwei Schulterteile (BS) umfaßt, von denen eines in jedem der zwei Laufflächenschulterteile in Rand-zu-Rand-Anschlag mit dem Mittelteil angeordnet ist, wobei das Mittelteil (BC) aus einer gummibeschichteten Cordware mit einer Breite gleich der Breite des Mittelteils zusammengesetzt ist, jedes Schulterteil (BS) aus wenigstens einem kontinuierlichen Cord zusammengesetzt ist, der spiralförmig kontinuierlich so gewickelt ist, daß er im wesentlichen parallel zum Reifenäquator (CL) angeordnet ist, und der Durchmesser des Schulterteils (BS) in der axialen Innenseite größer ist als in der axialen Außenseite.

2. Ein Reifen nach Anspruch 1,
gekennzeichnet durch eine zweite Gürtellage radial außerhalb von der ersten Gürtellage und mit dem gleichen Aufbau wie die erste Gürtellage, und dadurch, daß die Begrenzungen des Mittelteils (BC) und des Schulterteils (BS) jeder Gürtellage axial von den Begrenzungen der anderen Gürtellage verschoben sind.

3. Ein Reifen nach Anspruch 2,
gekennzeichnet durch drei derartige Gürtellagen, wobei die Begrenzungen des Mittelteils (BC) und des Schulterteils (BS) der drei Gürtellagen versetzt angeordnet sind.

4. Ein Reifen nach Anspruch 1, 2 oder 3,
dadurch gekennzeichnet, daß die Corde in dem Mittelteil (BC) unter einem spitzen Winkel zur Umfangsrichtung des Reifens liegen.

5. Ein Reifen nach Anspruch 1, 2 , 3 oder 4,
dadurch gekennzeichnet, daß wenigstens ein kontinuierlicher Cord in jedem Schulterteil (BS) eine Vielzahl von Corden umfaßt.

## Revendications

1. Pneumatique à carcasse radiale, comprenant une carcasse (2) composée d'au moins une nappe de câblés placée pratiquement dans la direction radiale, une couche (4) de ceinture comprenant une première nappe de ceinture adjacente à l'extérieur de la carcasse, caractérisé en ce que la première nappe de ceinture comporte une partie centrale (BC) placée dans la partie centrale de la bande de roulement et deux parties d'épaulement (BS) placées chacune dans l'une des deux parties d'épaulement de la bande de roulement, en butée bord à bord avec la partie centrale, la partie centrale (BC) étant composée d'une étoffe de câblés revêtus de caoutchouc ayant une largeur égale à la largeur de la partie centrale, chacune des parties d'épaulement (BS) étant composée d'au moins un câblé continu enroulé en spirale de façon continue afin qu'il soit pratiquement parallèle à l'équateur du pneumatique (CL), et le diamètre de la partie d'épaulement (BS) est plus grand dans la partie axialement interne que dans la partie axialement externe.

2. Pneumatique selon la revendication 1, caractérisé par une seconde nappe de ceinture placée radialement à l'extérieur de la première nappe de ceinture et ayant la première construction de la première nappe de ceinture, et les bordures de la partie centrale (BC) et de la partie d'épaulement (BS) de chaque nappe de ceinture sont décalées axialement par rapport aux bordures de l'autre nappe de ceinture.

3. Pneumatique selon la revendication 2, caractérisé par trois nappes de ceinture, les bordures de la partie centrale (BC) et de la partie d'épaulement (BS) des trois nappes de ceinture étant décalées.

4. Pneumatique selon la revendication 1, 2 ou 3, caractérisé en ce que les câblés de la partie centrale (BC) forment un angle aigu avec la direction circonférentielle du pneumatique.

5. Pneumatique selon la revendication 1, 2, 3 ou 4, caractérisé en ce qu'un câblé continu au moins de chacune des parties d'épaulement (BS) comporte plusieurs câblés.
